# EUROPÄISCHE PATENTSCHRIFT

(11) **EP 4 227 800 B1**
(45) Veröffentlichungstag und Bekanntmachung des Hinweises auf die Patenterteilung: **31.12.2025**
(21) Anmeldenummer: 22156541.9
(22) Anmeldetag: 14.02.2022
(51) Int. Cl.: G06F 8/71, G06F 11/3668

(54) **COMPUTER-IMPLEMENTIERTES VERFAHREN ZUM VERIFIZIEREN EINER MEHRZAHL VON COMMITS**
COMPUTER-IMPLEMENTED METHOD FOR VERIFYING A PLURALITY OF COMMITS
PROCÉDÉ MIS EN UVRE PAR ORDINATEUR PERMETTANT DE VÉRIFIER UNE PLURALITÉ DE VALIDATIONS

(43) Veröffentlichungstag der Anmeldung: 16.08.2023
(73) Patentinhaber: Siemens Aktiengesellschaft, 80333 München (DE)
(72) Erfinder: Hahn, Christian, 91315 Höchstadt a.d. Aisch (DE); Hentschel, Anja, 81735 München (DE)
(74) Vertreter: Siemens Patent Attorneys

(56) Entgegenhaltungen:
- US-A1- 2014 344 557
- US-A1- 2018 239 898
- US-A1- 2020 257 597
- US-B1- 11 232 097

## Beschreibung

### 1. Technisches Gebiet

Die Erfindung betrifft ein computer-implementiertes Verfahren zum Verifizieren einer Mehrzahl von Commits. Ferner betrifft die Erfindung ein entsprechendes technisches System sowie Computerprogrammprodukt.

### 2. Stand der Technik

Die Digitalisierung gewinnt zunehmend an Bedeutung. Die voranschreitende Digitalisierung macht die Softwareentwicklung ("Dev") in vielen Bereichen nötig. Üblicherweise ist eine Vielzahl von Entwicklern an der Entwicklung der Software erforderlich und beteiligt.

Bei der Software-Entwicklung hat die kontinuierliche Integration zur Steigerung der Softwarequalität eine zentrale Bedeutung. Sie umfasst üblicherweise die Phasen Commit, Build, Test und Deploy.

Die grundlegende Idee besteht darin eine gemeinsame Codebasis bereitzustellen, in welche die Entwickler ihre Änderungen kontinuierlich integrieren. Die gemeinsame Codebasis kann auch als Quellcode der Software bezeichnet werden. Die Software-Entwickler generieren hierzu zunächst unabhängige Beiträge, wie Änderungen des Codes. Diese Beiträge werden während der Integration in die gemeinsame Codebasis integriert. Diese Beiträge werden herkömmlicherweise als Commits bezeichnet. Mit anderen Worten sind die Commits folglich Zustände oder Versionen von Softwareabschnitten. Die einzelnen Beiträge müssen somit zu einer Anwendung oder Software zusammengefügt werden. Nach der Integration wird automatisch ein Build- und Testzyklus gestartet.

Üblicherweise ist die Komplexität der Software und des zugehörigen Software-Projektes sehr hoch. Darüber hinaus arbeiten meist viele Entwickler gleichzeitig an Änderungen. Dadurch ist eine hohe Anzahl an Commits sowie entsprechende Tests erforderlich. Dies führt in der Regel zu langen Build- und Testlaufzeiten.

Nachteilig daran ist jedoch, dass sich zwischen zwei Build-Läufen eine große Anzahl von Commits ansammelt, in der Regel pro Build- und Testlauf mehrere hundert Commits. Die angesammelten Commits werden erst im nächsten Build- und Testlauf integriert.

Darüber hinaus beeinflussen sich die Commits meist gegenseitig, da sie noch nicht integriert und somit auch nicht im Zusammenspiel getestet sind. Dies erhöht die Wahrscheinlichkeit, dass die Tests nach der Integration fehlschlagen. Die Commits sammeln sich dadurch weiterhin an, da unsicher ist welcher Commit durch ihr Zusammenwirken die Fehler verursacht haben. Besonders problematisch ist dies für Software-Projekte mit kurzen Release-Zyklen.

Bekannte Ansätze reduzieren die Anzahl der Commits und/oder der Tests. Die Nachteile bei der reduzierten Anzahl der Commits sind u.a., dass Entwickler viele Änderungen zu "großen" Commits zusammenfassen, eine "Entwicklungspause" erforderlich ist, um den Rückstau abzuarbeiten, ein hohe Time-to-Market und eine reduzierte Innovationskraft. Die Nachteile bei der reduzierten Anzahl der Tests oder sogar dem vollständigen Weglassen der Tests liegen darin, dass Fehler unerkannt bleiben, folglich die Qualität der Software sinkt und die Nutzer der Software unzufrieden sind.

Die Software-Entwicklung spielt beispielsweise in der Industrie 4.0 eine entscheidende Rolle. In der Fabrik der Industrie 4.0 koordinieren intelligente Maschinen selbstständig Fertigungsprozesse, beispielsweise unterstützen Service-Roboter unterstützen Menschen in der Montage bei schweren Arbeiten. Die Industrie 4.0 bestimmt dabei die gesamte Lebensphase eines Produktes: Von der Idee über die Entwicklung, Fertigung, Nutzung und Wartung bis hin zum Recycling.

Die Druckschrift US 2014/0344557 A1 betrifft ein Verfahren zur automatischen Durchsetzung einer hybriden Verzweigungsstrategie. Als Reaktion auf den Empfang eines Änderungssatzes wird automatisch festgestellt, ob ein mit dem Änderungssatz verbundener Zusammenführungskonflikt zwischen dem Zweig und einem zugehörigen geschützten Zweig besteht. Falls kein Zusammenführungskonflikt besteht, wird automatisch die Ausführung einer kontinuierlichen Integrationstestpipeline initiiert. Die Integrationstestpipeline umfasst eine Reihe von Tests. Die Tests werden auf den Änderungssatz angewendet. Falls der Änderungssatz die Testreihe besteht, wird der Änderungssatz automatisch mit dem zugehörigen geschützten Zweig zusammengeführt.

Die Druckschrift US 11 232 097 B1 offenbart ein Verfahren zum Zusammenführen von Commits von Code in einer Parallel-Code-Basisumgebung.

Die Druckschrift US 2018/239898 A1 offenbart eine Anomal-Commit-Erkennung.

Die Druckschrift US 2020/257597 A1 offenbart ein Verfahren zum Erzeugen einer Historien-Liste mit Commits.

Die vorliegende Erfindung stellt sich daher die objektive technische Aufgabe ein computer-implementiertes Verfahren zum Verifizieren einer Mehrzahl von Commits bereitzustellen, welches zuverlässiger und effizienter ist.

### 3. Zusammenfassung der Erfindung

Die oben genannte Aufgabe wird erfindungsgemäß durch ein computer-implementiertes Verfahren zum Verifizieren einer Mehrzahl von Commits gelöst, aufweisend die Schritte:
a. Bereitstellen der Mehrzahl der Commits und der Master-Codebasis als Eingabedatensatz;
b. Kombinieren der Mehrzahl der Commits und der Master-Codebasis in eine temporäre Codebasis;
c. Durchführen einer Mehrzahl von Integrationstests auf Basis der temporären Codebasis;
d. Freigeben und Bereitstellen der temporären Codebasis als angepasste Master-Codebasis; falls alle Integrationstests der Mehrzahl der Integrationstest erfolgreich sind;
e. Erzeugen einer Mehrzahl von Clustern mit jeweiligen Commits durch Clustern der Mehrzahl der Commits anhand eines Clusterkriteriums und Fortfahren mit den Verfahrensschritten f. und g.; falls mindestens ein Integrationstest der Mehrzahl der Integrationstests fehlschlägt;
f. Sortieren der Mehrzahl der Cluster anhand eines Rankingkriteriums in eine sortierte Mehrzahl der Cluster; wobei
   die Cluster der sortierten Mehrzahl der Cluster eine Reihenfolge aufweisen, aufweisend ein erstes Cluster und ein letztes Cluster;
g. für jedes Cluster der sortierten Mehrzahl der Cluster, einschließlich des letzten Clusters; in der Reihenfolge vom ersten Cluster bis zum letzten Cluster:
   Kombinieren der Mehrzahl der Commits des gewählten Clusters und der Master-Codebasis in eine temporäre Codebasis;
   Durchführen der Mehrzahl der Integrationstests auf Basis der temporären Codebasis;
   Freigeben und Bereitstellen der temporären Codebasis als angepasste Master-Codebasis; falls alle Integrationstests der Mehrzahl der Integrationstest erfolgreich sind;
   Zurückweisen des gewählten Clusters und Wiederholen von Schritt g. mit dem nächsten Cluster aus der sortierten Mehrzahl der Cluster; und
h. Wiederholung ab Schritt e. mit der Mehrzahl der Commits aus mindestens einem zurückgewiesenen Cluster und der angepassten Master-Codebasis als Eingabedatensatz unter Verwendung eines anderen Clusterkriteriums.

Dementsprechend ist die Erfindung auf ein computer-implementiertes Verfahren zum Verifizieren einer Mehrzahl von Commits gerichtet. Mit anderen Worten werden die Commits dahin gehend überprüft, ob sie freigegeben werden können oder zurückgewiesen werden müssen.

Hierzu wird in einem ersten Verfahrensschritt der Eingabedatensatz in Form der Commits bereitgestellt. Der Eingabedatensatz kann über eine oder mehrere Eingabeschnittstellen bsp. einer Recheneinheit empfangen werden. Der Eingabedatensatz kann in einer flüchtigen oder nicht-flüchtigen Speichereinheit gespeichert werden und/oder von dieser Speichereinheit empfangen werden. Beispielhafte Speichereinheiten sind ein Konfigurationsmanagementsystem, eine Datenbank und eine Cloud.

Der Begriff Commit kann im herkömmlichen Sinne ausgelegt werden, folglich als Beiträge wie Änderungen eines Codes, geänderter Code, einzelner Code oder Code-Beitrag eines Entwicklers. Die Commits können zusätzliche Informationen oder Daten umfassen, wie Metadaten. Beispielhafte Metadaten sind Zeitangaben wie ein Zeitstempel ("Time Stamp"), der einen Hinweis auf den Zeitpunkt der Änderung gibt. Weitere Metadaten können Angaben zum Entwickler des Codes sein oder auch die Programmiersprache etc.

Die bereitgestellten Commits werden in einem nächsten Verfahrensschritt in eine temporäre Codebasis kombiniert. Die temporäre Codebasis umfasst folglich die Kombination der einzelnen Commits mit der Master-Codebasis. Die Master-Codebasis kann als freigegebene Produktversion ausgelegt werden. Die temporäre Codebasis kann als Master mit einer ausgewählten oder bestimmten Mehrzahl von integrierten Commits ausgelegt werden.

Auf der temporären Codebasis werden Integrationstests durchgeführt, üblicherweise mehrere hundert Tests. Ein beispielhafter Integrationstest ist ein Performancetest. Der Integrationstest dient dazu festzustellen, ob die Kombination bzw. das Zusammenspiel der einzelnen Commits in der temporären Codebasis funktioniert. Mit anderen Worten wird ermittelt, ob die temporäre Codebasis ausführbar ist und im Feld anforderungsgemäß und störungsfrei angewendet werden kann oder nicht. Die Tests können beispielsweise feststellen, ob unterschiedliche bzw. getrennte Hardware-Komponenten oder Software-Komponenten, wie USB und Drucker oder Client und Server im Zusammenspiel funktionieren.

Die Integrationstests sind entweder erfolgreich (schlagen nicht fehl) oder nicht erfolgreich (schlagen fehl). Falls ein Integrationstest fehlschlägt, funktioniert das Zusammenspiel der einzelnen Commits nicht. Falls ein Integrationstest erfolgreich ist, funktioniert das Zusammenspiel.

Die Durchführung der Mehrzahl der Integrationstests auf Basis der temporären Codebasis kann als Zwischenergebnis eine Liste liefern mit den durchgeführten Integrationstests und der Angabe oder dem Hinweis darüber, ob der Integrationstest erfolgreich ist oder fehlschlägt. Mit anderen Worten, schlägt mindestens ein Integrationstest fehl, gibt es mindestens einen schlechten Commit.

Im optimalen Fall sind alle Integrationstests erfolgreich und kein einziger Integrationstest schlägt somit fehl. In diesem Fall wird die temporäre Codebasis als angepasste Master-Codebasis direkt freigeben und bereitgestellt. Die temporäre Codebasis ist folglich die neue Master-Codebasis. Weitere Verfahrensschritte sind nicht erforderlich.

Falls ein oder mehrere Integrationstests jedoch fehlschlagen, sind weitere Verfahrensschritte erforderlich und werden durchgeführt:
Zunächst werden die Commits geclustert. Das Clustering resultiert in Cluster, aufweisend Commits, und somit auch eine bestimmte Anzahl von Clustern. Weiterhin werden die resultierenden Cluster geranked, das heißt sortiert und in eine Reihenfolge gebracht mit einem ersten Cluster (Cluster 1), einem zweiten Cluster (Cluster 2),... und einem letzten Cluster (Cluster N) mit der Reihenfolge 1 bis N.

Jedes Cluster und die Commits innerhalb des Clusters werden erneut getestet, der Reihe in der Reihenfolge nach. Der Verfahrensschritt g. wird für jedes Cluster wiederholt. Die Master-Codebasis wird dabei wichtiger Weise beim Kombinieren stets erweitert, nämlich mit jedem Cluster aus der sortierten Mehrzahl der Cluster, um ein weiteres Cluster und die entsprechenden Commits aus dem Cluster, im Detail wie folgt:
Die Master-Codebasis wird zunächst um das erste Cluster 1 erweitert, resultierend in die um das erste Cluster 1 erweiterte temporäre Codebasis. Bei erfolgreicher Ausführung der Integrationstests wird die temporäre Codebasis die angepasste Master-Codebasis. Bei nicht erfolgreicher Ausführung der Integrationstests bleibt die Master-Codebasis unverändert.

Die Master-Codebasis wird dann um das zweite Cluster 2 erweitert, resultierend in die um das zweite Cluster 2 erweiterte temporäre Codebasis usw.

Die um das letzte Cluster N erweiterte temporäre Codebasis umfasst somit die Kombination aller vorhergehenden Cluster **N-**1 und das letzte Cluster N selbst, bei denen alle Integrationstests erfolgreich ausgeführt wurden.

Bei der Bearbeitung der zurückgewiesenen Cluster in Schritt h. wird beim erneuten Clustering im Verfahrensschritt e. ein anderes Clusterkriterium verwendet.

Die vorliegende Erfindung unterteilt die Commits somit in gute und schlechte Commits, die guten Commits, welche die Integrationstests alle bestehen, werden unmittelbar freigegeben und stauen sich dadurch nicht auf. Die Anzahl der Commits verringert sich im Gegensatz zum Stand der Technik erheblich, vor allem auch zwischen den Builds. Ein nachteiliger Rückstau der Commits wird verhindert und die Build- und Testlaufzeiten insgesamt verkürzt. Die Tests werden weiterhin in Form der Integrationstests durchgeführt, wodurch die Vertrauenswürdigkeit und Sicherheit der Commits garantiert wird und nicht gefährdet ist.

In einer Ausgestaltung erfolgt die Durchführung des mindestens einen Integrationstests während eines Builds.

In einer Ausgestaltung ist das Clusterkriterium ein Kriterium, ausgewählt aus der Gruppe bestehend aus: einer Anzahl der Änderungen im Code, einer Codestruktur und Metadaten des Commits.

In einer Ausgestaltung ist das Rankingkriterium eine Kundenanforderung oder ein Kundennutzen.

Die Erfindung betrifft ferner ein technisches System. Dementsprechend wird das erfindungsgemäße Verfahren durch ein technisches System durchgeführt. Das technische System kann ein oder mehrere Untereinheiten wie Recheneinheiten aufweisen.

Beispielsweise können ein Verfahrensschritt oder mehrere auf einer Recheneinheit durchgeführt werden. Andere Verfahrensschritte können auf der gleichen oder einer anderen Recheneinheit durchgeführt werden. Zusätzlich kann das technische System auch Speichereinheiten etc. aufweisen. Beispielhafte technische Systeme sind Robotereinheiten, Steuereinheiten, autonome Fahrzeuge und andere Recheneinheiten.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.

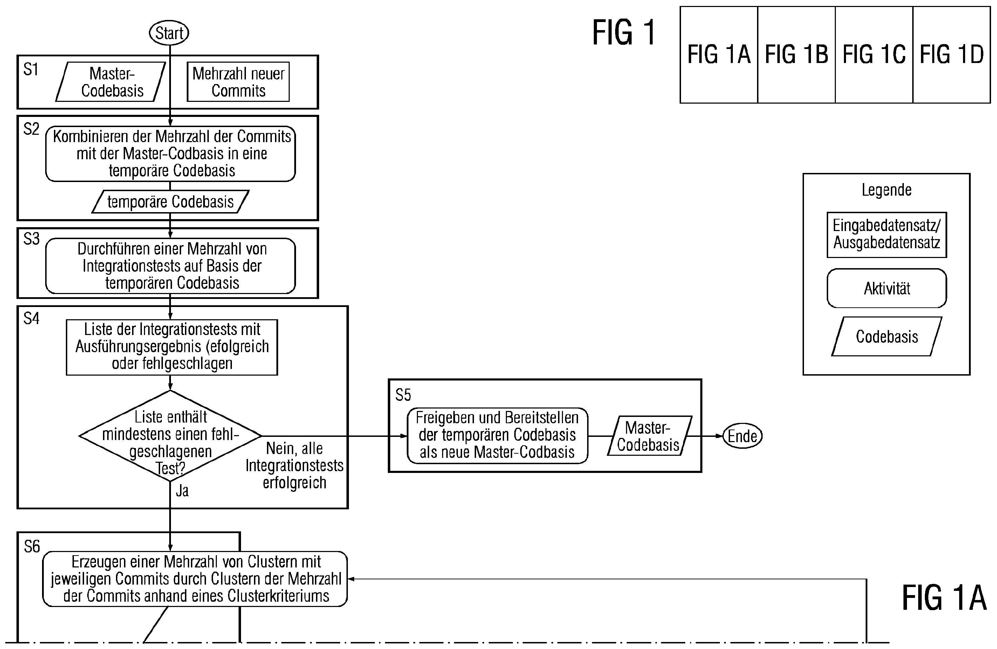

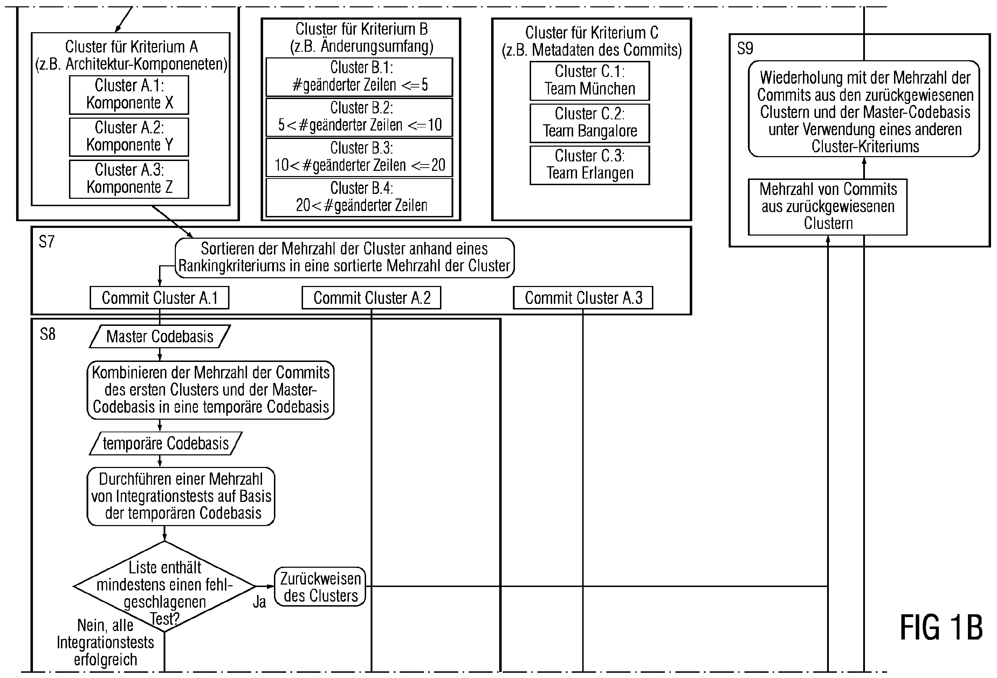

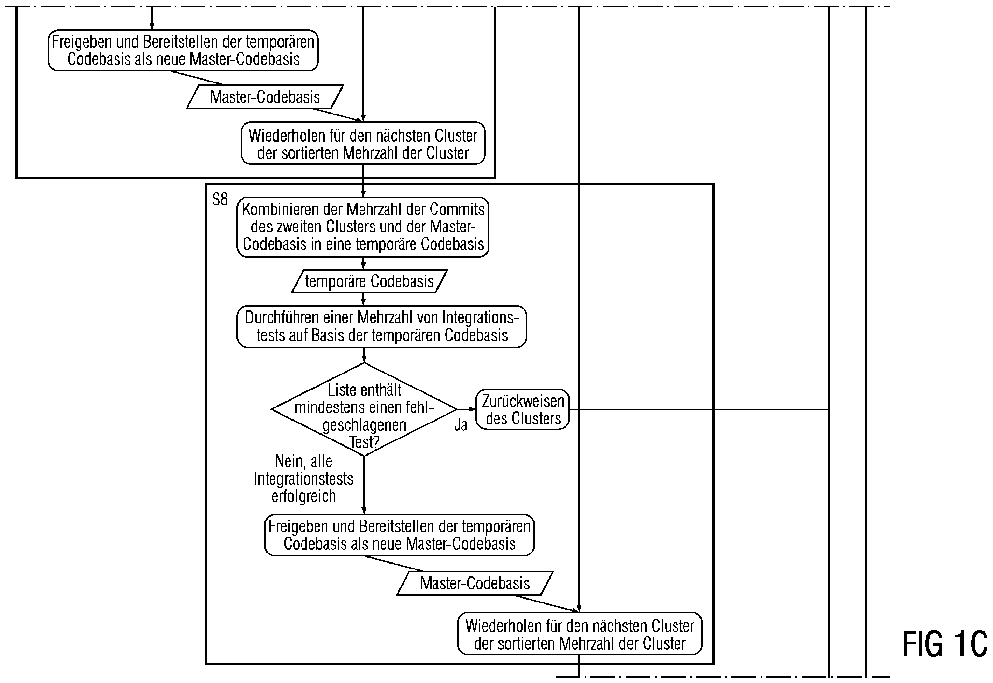

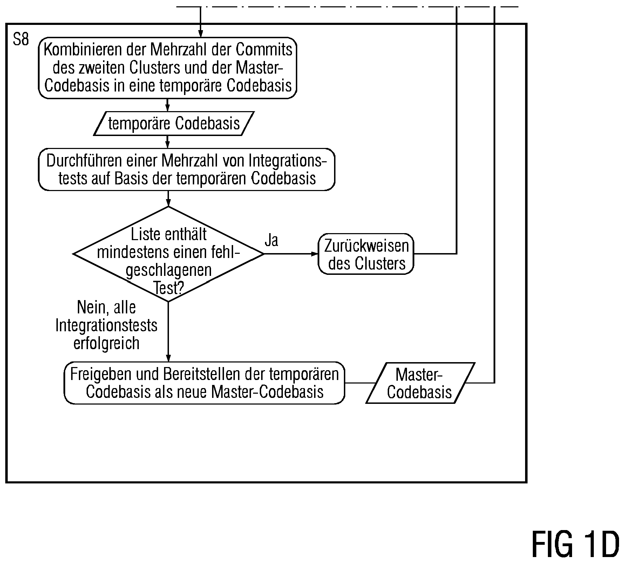

- FIG 1: zeigt eine schematische Darstellung des computerimplementierten Verfahrens gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

Figur 1 zeigt eine schematische Darstellung des computerimplementierten Verfahrens gemäß einer Ausführungsform der Erfindung.

Entwicklungsteams führen eine große Zahl von Änderungen an einer bestehenden Master-Codebasis durch und stellen ihre Änderungen in Form vieler Commits im Konfigurationsmanagementsystem bereit.

Das Buildsystem integriert die bereitgestellten Commits mit der Master-Codebasis zu einer temporären Codebasis.

Zur Absicherung der Qualität wird eine große Zahl von Integrationstests gegen die temporäre Codebasis ausgeführt.

Die Ergebnisse der Integrationstests werden auf Erfolg (erfolgreicher Test) oder Misserfolg (fehlgeschlagener Test) geprüft.

Falls alle Integrationstests erfolgreich sind, wird die temporäre Codebases zur angepassten Master-Codebasis. Die angepasste Master-Codebasis kann in diesem Fall an die Kunden freigegeben werden.

Falls mindestens ein Integrationstests fehlgeschlagen ist:
Es gibt eine Liste von Kriterien, anhand derer die Commits in Cluster eingeteilt werden können. Beispielhafte Clusterkriterien sind Architektur-Komponenten, Anzahl der geänderten Zeilen in einem Commit, Meta-Daten zum Commit etc. Eines dieser Clusterkriterien wird ausgewählt und die Commits dementsprechend geclustert, beispielsweise anhand der Architektur-Komponenten in "Komponente X", "Komponente Y" und "Komponente Z". Die temporäre Codebasis aus Schritt wird in diesem Fall verworfen.

Die Cluster werden nach einem gewählten Rankingkriterium (z.B. Wichtigkeit der Komponente für den Kunden) sortiert (z.B. "Cluster A.1" vor "Cluster A.2" vor "Cluster A.3").

Beginnend mit dem wichtigsten Cluster (im Beispiel "Cluster A.1"), werden die Commits dieses Clusters mit der Master-Codebases in eine temporäre Codebases integriert. Alle Integrationstests werden gegen diese temporäre Codebasis ausgeführt und die Ergebnisse werden geprüft. Falls mindestens ein Integrationstest fehlschlägt, werden die Commits des Clusters zurückgewiesen. In diesem Fall wird die temporäre Codebasis verworfen und die Master-Codebasis bleibt unverändert. Falls hingegen alle Integrationstests erfolgreich sind, wird die temporäre Codebases zur angepassten Master-Codebasis und kann an die Kunden freigegeben werden. Dieser Schritt wird in der Reihenfolge der Sortierung für alle weiteren Cluster wiederholt.

Für die zurückgewiesenen Commits wird der Ablauf erforderlichenfalls (z.B. bei vielen zurückgewiesenen Commits) mit dem nächsten Clusterkriterium wiederholt.

### Beispielhafte Anwendungen:

### Anwendungsfall 1:

- Kontext: Software für Grid Control (Energieverteilung), z.B. Überwachung, Analyse und Vermeidung von Stromausfällen, Planung von Änderungen der Systemkonfiguration
- Eingabe: große Anzahl von Commits (Softwareänderungen)
- Ausgabe: Identifikation von Commits, die fehlerfrei integriert werden können
- Aktion: Treffen von Freigabeentscheidungen für neuen Produktversionen
- Nutzen: bessere Entscheidungsgrundlage für Releasefähigkeit mit mehr Optionen (z.B**.** verzögertes Release mit allen Commits ersetzbar durch sofortiges Release mit nur den fehlerfreien Commits)

### Anwendungsfall 2:

- Kontext: Software für Engineering in der Industrieautomatisierung, z.B. Programmierung von Controllern und Bedienpanels, Hardwarekonfiguration
- Eingabe: große Anzahl von Commits (Softwareänderungen)
- Ausgabe: geringe Anzahl von zurückgewiesenen Commits
- Aktion: Fehlerbehebung vor Freigabe (release) von neuen Produktversionen
- Nutzen: kürzere Fehlerbehebungszeiten da wenige Commits betrachtet werden müssen (anstelle der Gesamtmenge der großen Anzahl aller Commits)

## Patentansprüche

1. Computer-implementiertes Verfahren zum Verifizieren einer Mehrzahl von Commits, aufweisend die Schritte:
a. Bereitstellen der Mehrzahl der Commits und der Master-Codebasis als Eingabedatensatz;
b. Kombinieren der Mehrzahl der Commits und der Master-Codebasis in eine temporäre Codebasis;
c. Durchführen einer Mehrzahl von Integrationstests auf Basis der temporären Codebasis;
d. Freigeben und Bereitstellen der temporären Codebasis als angepasste Master-Codebasis; falls alle Integrationstests der Mehrzahl der Integrationstest erfolgreich sind; **dadurch gekennzeichnet, dass**
e. Erzeugen einer Mehrzahl von Clustern mit jeweiligen Commits durch Clustern der Mehrzahl der Commits anhand eines Clusterkriteriums und Fortfahren mit den Verfahrensschritten f. und g.; falls mindestens ein Integrationstest der Mehrzahl der Integrationstests fehlschlägt; wobei mindestens ein Cluster eine Mehrzahl von Commits aufweist;
f. Sortieren der Mehrzahl der Cluster anhand eines Rankingkriteriums in eine sortierte Mehrzahl der Cluster; wobei
die Cluster der sortierten Mehrzahl der Cluster eine Reihenfolge aufweisen, aufweisend ein erstes Cluster und ein letztes Cluster;
g. für jedes Cluster der sortierten Mehrzahl der Cluster, einschließlich des letzten Clusters; in der Reihenfolge vom ersten Cluster bis zum letzten Cluster:
Kombinieren der Mehrzahl der Commits des gewählten Clusters und der Master-Codebasis in eine temporäre Codebasis;
Durchführen der Mehrzahl der Integrationstests auf Basis der temporären Codebasis;
Freigeben und Bereitstellen der temporären Codebasis als angepasste Master-Codebasis; falls alle Integrationstests der Mehrzahl der Integrationstest erfolgreich sind;
Zurückweisen des gewählten Clusters und Wiederholen von Schritt g. mit dem nächsten Cluster aus der sortierten Mehrzahl der Cluster; falls mindestens ein Integrationstest der Mehrzahl der Integrationstests fehlschlägt; und
h. Wiederholung ab Schritt e. mit der Mehrzahl der Commits aus mindestens einem zurückgewiesenen Cluster und der angepassten Master-Codebasis als Eingabedatensatz unter Verwendung eines anderen Clusterkriteriums.

2. Computer-implementiertes Verfahren nach Anspruch 1, wobei die Durchführung des mindestens einen Integrationstests während eines Builds erfolgt.

3. Computer-implementiertes Verfahren nach Anspruch 1 oder Anspruch 2, wobei das Clusterkriterium ein Kriterium ist, ausgewählt aus der Gruppe bestehend aus:
Einer Anzahl der Änderungen im Code, einer Codestruktur und Metadaten des Commits.

4. Computer-implementiertes Verfahren nach einem der vorhergehenden Ansprüche, wobei das Rankingkriterium eine Kundenanforderung oder ein Kundennutzen ist.

5. Technisches System zum Durchführen des computerimplementierten Verfahrens nach einem der vorhergehenden Ansprüche.

6. Computerprogrammprodukt mit einem Computerprogramm, das Mittel zur Durchführung des Verfahrens nach einem der Ansprüche 1 bis 4 aufweist, wenn das Computerprogramm auf einer programmgesteuerten Einrichtung zur Ausführung gebracht wird.

## Claims

1. Computer-implemented method for verifying a plurality of commits, comprising the steps:
a. providing the plurality of commits and the master codebase as input data set;
b. combining the plurality of commits and the master codebase into a temporary codebase;
c. performing a plurality of integration tests on the basis of the temporary codebase;
d. releasing and providing the temporary codebase as an adapted master codebase if all the integration tests of the plurality of integration tests are successful;
**characterized in that**
e. generating a plurality of clusters having respective commits by clustering the plurality of commits on the basis of a clustering criterion and continuing with method steps f. and g. if at least one integration test of the plurality of integration tests fails; wherein at least one cluster has a plurality of commits;
f. sorting the plurality of clusters on the basis of a ranking criterion into a sorted plurality of clusters, wherein
the clusters of the sorted plurality of clusters have an order with a first cluster and a last cluster;
g. for each cluster of the sorted plurality of clusters, including the last cluster, in the order from the first cluster to the last cluster:
combining the plurality of commits of the selected cluster and the master codebase into a temporary codebase;
performing the plurality of integration tests on the basis of the temporary codebase;
releasing and providing the temporary codebase as an adapted master codebase if all the integration tests of the plurality of integration tests are successful;
rejecting the selected cluster and repeating step g. with the next cluster from the sorted plurality of clusters if at least one integration test of the plurality of integration tests fails; and
h. repeating from step e. with the plurality of commits from at least one rejected cluster and the adapted master codebase as input data set, using a different clustering criterion.

2. Computer-implemented method according to Claim 1, wherein the at least one integration test is performed during a build.

3. Computer-implemented method according to Claim 1 or Claim 2, wherein the clustering criterion is a criterion selected from the group consisting of:
a number of changes in the code, a code structure and metadata of the commit.

4. Computer-implemented method according to one of the preceding claims, wherein the ranking criterion is a customer requirement or a customer benefit.

5. Technical system for performing the computer-implemented method according to one of the preceding claims.

6. Computer program product comprising a computer program that has means for performing the method according to one of Claims 1 to 4 when the computer program is executed on a program-controlled device.

## Revendications

1. Procédé implémenté par ordinateur pour la vérification d'une pluralité de validations, comprenant les étapes suivantes :
a. fourniture de la pluralité des validations et de la base de code maître en tant qu'ensemble de données d'entrée ;
b. combinaison de la pluralité des validations et de la base de code maître dans une base de code temporaire ;
c. mise en œuvre d'une pluralité de tests d'intégration sur la base de la base de code temporaire ;
d. partage et fourniture de la base de code temporaire en tant que base de code maître adaptée ; dans le cas où tous les tests d'intégration de la pluralité des tests d'intégration sont réussis ;
**caractérisé par**
e. production d'une pluralité de grappes avec des validations respectives par regroupement en grappes de la pluralité des validations à l'aide d'un critère de regroupement en grappes et poursuite avec les étapes de procédé f. et g. ; dans le cas où au moins un test d'intégration de la pluralité des tests d'intégration échoue ; dans lequel au moins une grappe comprend une pluralité de validations ;
f. tri de la pluralité des grappes à l'aide d'un critère de classement dans une pluralité triée des grappes ; dans lequel les grappes de la pluralité triée des grappes comprennent une séquence, comprenant une première grappe et une dernière grappe ;
g. pour chaque grappe de la pluralité triée des grappes, y compris la dernière grappe ; dans la séquence allant de la première grappe jusqu'à la dernière grappe :
combinaison de la pluralité des validations de la grappe sélectionnée et de la base de code maître dans une base de code temporaire ;
mise en œuvre de la pluralité des tests d'intégration sur la base de la base de code temporaire ;
partage et fourniture de la base de code temporaire en tant que base de code maître adaptée ; dans le cas où tous les tests d'intégration de la pluralité des tests d'intégration sont réussis ;
rejet de la grappe sélectionnée et répétition de l'étape g. avec la grappe suivante issue de la pluralité triée des grappes ; dans le cas où au moins un test d'intégration de la pluralité des tests d'intégration échoue ; et
h. répétition à partir de l'étape e. avec la pluralité des validations issues d'au moins une grappe rejetée et de la base de code maître adaptée en tant qu'ensemble de données d'entrée au moyen d'un autre critère de regroupement en grappes.

2. Procédé implémenté par ordinateur selon la revendication 1, dans lequel la mise en œuvre de l'au moins un test d'intégration s'effectue pendant une compilation.

3. Procédé implémenté par ordinateur selon la revendication 1 ou la revendication 2, dans lequel le critère de regroupement en grappes est un critère sélectionné dans le groupe constitué :
d'une quantité des modifications dans le code, d'une structure de code et de métadonnées de la validation.

4. Procédé implémenté par ordinateur selon l'une des revendications précédentes, dans lequel le critère de classement est une exigence du client ou un avantage pour le client.

5. Système technique pour la mise en œuvre du procédé implémenté par ordinateur selon l'une des revendications précédentes.

6. Produit de programme informatique avec un programme informatique, lequel comprend des moyens pour la mise en œuvre du procédé selon l'une des revendications 1 à 4 lorsque le programme informatique est exécuté sur un dispositif commandé par programme.
